# FASCICULE DE BREVET EUROPEEN

(11) **EP 1 508 237 B1**
(45) Date de publication et mention de la délivrance du brevet: **17.10.2007**
(21) Numéro de dépôt: 03755221.3
(22) Date de dépôt: 23.05.2003
(51) Int. Cl.: H04L 29/06

(54) **PROTOCOLE DE COMMUNICATION ENTRE UN MODULE D'APPLICATION VOCALE ET UNE PLATE-FORME VOCALE DANS UN SERVEUR VOCAL**
KOMMUNIKATIONSPROTOKOLL ZWISCHEN EINEM SPRACHANWENDUNGSMODUL UND EINER SPRACHPLATTFORM IN EINEM SPRACH-SERVER
COMMUNICATION PROTOCOL BETWEEN A VOICE APPLICATION MODULE AND A VOICE PLATFORM IN A VOICE SERVER

(30) Priorité: 28.05.2002 FR 0206475
(43) Date de publication de la demande: 23.02.2005
(73) Titulaire: FRANCE TELECOM, 75015 Paris (FR)
(72) Inventeur: FERRIEUX, Alexandre, F-22560 Pleumeur Bodou (FR); FERRIEUX, Laurence, F-22560 Pleumeur Bodou (FR); MONNE, Jean, F-22700 Perros Guirec (FR)
(86) Numéro de dépôt international: PCT/FR2003/001658
(87) Numéro de publication internationale: WO 2003/101070

(56) Documents cités:
- WO-A-00/20962
- US-A- 5 945 989
- ECTF: "S.200 Media Services Protocol Specification" ECTF, 6 décembre 1998 (1998-12-06), XP002229627 Extrait de l'Internet: <URL:http://www.ectf.org/pages/pubdocs/s20 0r0-1.pdf> [extrait le 2003-01-14]

## Description

La présente invention concerne les serveurs vocaux comprenant une plate-forme vocale offrant un ensemble de fonctions vocales et un module d'application vocale contrôlant la plate-forme pour gérer la communication entre un terminal utilisateur et la plate-forme. Plus particulièrement, l'invention concerne le mode de contrôle de la plate-forme par le module d'application.

De manière générale, un serveur vocal interactif (SVI) peut être défini comme un serveur vocal à partir duquel un utilisateur peut échanger des messages vocaux, c'est-à-dire dialoguer, avec un système informatique. Typiquement, l'utilisateur communique avec le serveur vocal interactif, au moyen d'un terminal approprié (par ex. un téléphone), au travers d'un réseau d'accès, par exemple un réseau téléphonique commuté (RTC) ou un réseau numérique (RNIS).

De manière conventionnelle, un serveur vocal interactif comprend une plate-forme vocale, constituée d'un ensemble de ressources matérielles et logicielles, fournissant un ensemble de fonctionnalités vocales, telles que par exemple, la téléphonie, la reconnaissance vocale, la synthèse vocale, etc. Ces fonctionnalités sont généralement fournies sous la forme d'une bibliothèque de fonctions vocales.

Un serveur vocal interactif comprend, d'autre part, un module d'application vocale (logiciel de dialogue) implémentant la logique de dialogue, qui contrôle la plate-forme vocale pour assurer la gestion des échanges de messages vocaux entre un utilisateur connecté au serveur, typiquement au travers d'un réseau téléphonique, et la plate-forme vocale. Le module d'application vocale contrôle la plate-forme par l'envoi à celle-ci de commandes destinées à mettre en oeuvre les fonctions vocales fournies par la plate-forme. En particulier, ces commandes déclenchent dans la plate-forme des appels aux fonctions vocales.

Le module d'application est généralement intimement lié, du point de vue de sa structure et du langage de programmation qu'il utilise, à la plate-forme vocale et en particulier aux fonctionnalités qu'elle offre. Les fonctionnalités offertes par la plate-forme vocale sont en effet généralement vues par le logiciel de dialogue, comme des primitives, typiquement des fonctions programmées, qui sont appelées lors de l'exécution du logiciel de dialogue.

Les appels de fonctions offertes par la plate-forme sont généralement effectués par le logiciel de dialogue au travers d'une API (*Application Program Interface*)*.* Le choix du langage de programmation utilisable pour concevoir un logiciel de dialogue destiné à une plate-forme vocale donnée est donc très limité.

Par ailleurs, le couplage étroit qui existe entre le (ou les) langage(s) de programmation utilisé(s) pour décrire la logique de dialogue, et les fonctions offertes par la plate-forme vocale, a pour conséquence qu'un logiciel de dialogue conçu pour une plate-forme vocale donnée n'est généralement pas utilisable avec une autre plate-forme vocale, à moins de subir préalablement une adaptation (portage du code) à l'environnement informatique de l'autre plate-forme. Il en résulte donc un défaut de portabilité et de modularité d'un logiciel d'application vocale considéré, vis-à-vis des plate-formes vocales disponibles sur le marché.

Le langage VoiceXML (*Voice extensible Markup Language*) permet dans une certaine mesure de remédier au défaut de portabilité précité, dans le cadre du développement d'applications vocales sur le Web. Le langage VoiceXML est un langage textuel, de syntaxe XML, permettant de décrire des dialogues vocaux. Cependant, l'utilisation de ce langage rend très difficile le choix d'un autre langage de programmation pour concevoir un logiciel de dialogue. D'autre part, la définition des fonctions vocales avec VoiceXML est effectuée à un très haut niveau, ce qui limite les possibilités de personnalisation des fonctionnalités vocales, selon l'application considérée.

Le document WO0020962A2 concerne un système informatique conversationnel qui assure l'interface utilisateur conversationnelle.

Le but de la présente invention, telle que décrite par les revendications indépendantes 1, 11 et 12, est de résoudre les inconvénients précités relatifs à l'architecture conventionnelle d'un serveur vocal.

Conformément à l'invention, ce but est atteint par un serveur vocal, remarquable en ce qu'il comprend des moyens de communication aptes à mettre en oeuvre un protocole de communication de type client-serveur entre le module d'application et la plate-forme, vis-à-vis duquel le module d'application est le client et la plate-forme le serveur, et selon lequel l'envoi de chaque commande par le module d'application est suivi de l'envoi d'une réponse par la plate-forme, la réception de cette réponse par le module d'application conditionnant l'envoi d'une commande suivante.

Grâce à ce protocole de communication, il n'y a plus de dépendance entre le langage de programmation utilisé pour décrire la logique de dialogue dans le module d'application et les fonctions offertes par la plate-forme vocale. En effet, un tel protocole établit un ensemble de conventions nécessaires pour faire coopérer le module d'application et la plate-forme indépendamment de leur structure interne respective.

Selon une caractéristique préférée de l'invention, le module d'application vocale et la plate-forme vocale sont implantés respectivement sur des systèmes informatiques distincts reliés l'un avec l'autre par l'intermédiaire d'un réseau de communication, par exemple un réseau local, voire un réseau de type Internet.

Grâce à cette caractéristique, on peut s'affranchir des contraintes de systèmes d'exploitation (OS) puisque la plate-forme vocale (le serveur) et le module d'application (le client) peuvent être implantés sur des ordinateurs distincts ayant un système d'exploitation différent.

Selon une autre caractéristique avantageuse, les moyens de réception de messages de requête de la plate-forme vocale sont aptes à recevoir des messages en provenance de plusieurs modules d'application distincts, la plate-vocale comprenant en outre des moyens de gestion de files d'attente aptes à traiter les files d'attente d'exécution d'évènements générés par le traitement des commandes reçues de chaque module d'application.

Ainsi, la plate-forme vocale peut gérer simultanément les requêtes de plusieurs modules d'applications vocales (clients) distincts qui sont, par exemple, implantés respectivement sur des systèmes informatiques distincts, reliés via un réseau de communication à la plate-forme vocale.

Selon une caractéristique particulière de l'invention, les moyens de communication du serveur vocal comprennent une voie de transmission apte à permettre la transmission d'informations entre le module d'application et la plate-forme, selon un protocole de transmission prédéfini.

Selon un mode de réalisation particulier, la voie de transmission est constituée par une connexion selon le protocole de transmission TCP *(Transmission Control Protocol).*

L'utilisation du protocole TCP comme protocole de transmission permet une intégration aisée d'un serveur vocal interactif selon l'invention dans le réseau Internet.

Selon une caractéristique préférée de l'invention, le protocole de communication est un protocole textuel ligne-à-ligne.

Ainsi, contrairement à un protocole de type binaire où les informations sont transmises sous forme de mots binaires, par exemple des octets, un protocole selon l'invention de type textuel permet de s'affranchir de tout problème d'ordre des mots binaires transmis, dans le cadre de la reconstitution de l'information transmise. Par ailleurs, un protocole textuel dans lequel l'information est transmise ligne par ligne à l'aide de séparateurs non ambigus, offre l'avantage de garantir une grande simplicité lors de la mise au point.

L'invention concerne aussi des programmes d'ordinateur exécutables dans une plate-forme vocale ou dans un module d'application vocale, et aptes à mettre en oeuvre un protocole de communication selon l'invention.

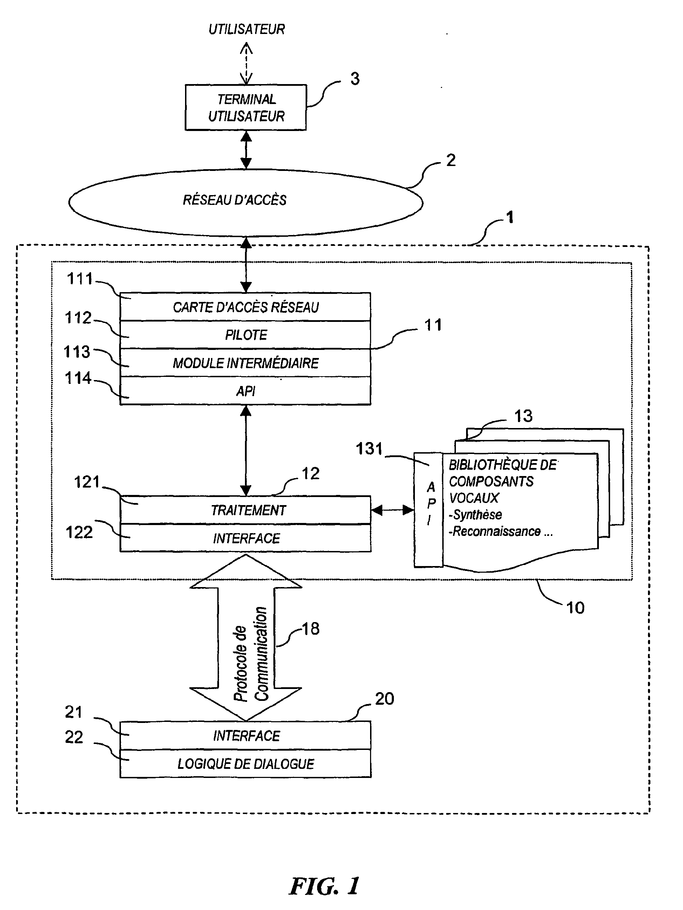

D'autres particularités et avantages de l'invention apparaîtront encore dans la description détaillée ci-après de modes préférés de réalisation, décrits à l'appui du dessin annexé, sur lequel la FIGURE 1 est un bloc-diagramme d'un serveur vocal interactif selon l'invention.

En référence à la FIG. 1, un serveur vocal interactif 1 selon l'invention comprend de manière classique une plate-forme vocale 10, constituée d'un ensemble de ressources matérielles et logicielles, et fournissant un ensemble de fonctions vocales (13), telles que par exemple la reconnaissance vocale et la synthèse vocale. Ces fonctions sont généralement fournies sous la forme d'une bibliothèque de fonctions vocales.

Ces fonctions ou ressources vocales sont accessibles par un module de contrôle 12 de la plate-forme, typiquement via des interfaces de programme 131 de type API *(Application Program Interface).*

Les types de ressources vocales (13) les plus utiles dans le contexte des serveurs vocaux sont : la téléphonie, la synthèse vocale ou la restitution de sons préenregistrés, la reconnaissance vocale, la détection de multifréquences à deux tonalités (DTMF - *dual tone multifrequency),* l'enregistrement de sons.

Le serveur vocal 1 comprend classiquement un module d'application vocale 20 qui implémente une logique de dialogue 22 permettant de gérer la communication entre un terminal utilisateur 3 et le serveur vocal 1. A cet effet, le module d'application 20 génère et envoie au module de contrôle 12 de la plate-forme, des commandes dont l'exécution est destinée à mettre en oeuvre les fonctions vocales 13.

Le terminal utilisateur 3 est typiquement un poste de téléphone fixe ou mobile connecté au serveur vocal 1 via un réseau d'accès 2 typiquement un réseau commuté analogique (RTC) ou numérique (RNIS).

Le serveur vocal 1 est connecté de manière classique au réseau d'accès 2 par l'intermédiaire d'une interface réseau 11 comprenant une carte d'accès réseau 111, un composant pilote 112 qui gère l'émission / réception d'informations sur la carte d'accès 111.

L'interface réseau 11 comprend par ailleurs un module logiciel intermédiaire 113 *(middleware)* qui fournit une interface 114 de type API permettant au module de contrôle 12 de la plate-forme de récupérer les flux de signaux provenant de la carte d'accès 111 ou de transmettre des flux de signaux via la carte d'accès au réseau d'accès 2.

Conformément à l'invention, le module d'application vocale 20 est indépendant du module de contrôle 12 et donc de la plate-forme 10. A cet effet, le module d'application 20 et la plate-forme 10 communiquent via une voie de transmission 18 selon un protocole de communication de type client-serveur, vis-à-vis duquel le module d'application vocale 20 est le client et la plate-forme 10 est le serveur.

La voie de transmission 18 est apte à assurer la transmission d'informations entre le module d'application 20 et la plate-forme 10 selon un protocole de transmission prédéfini.

Selon un mode de réalisation préféré de réalisation de l'invention, ce protocole de transmission est le protocole TCP *(Transmission Control Protocol).* Le module d'application 20 et la plate-forme vocale 10 communiquent alors au travers d'une connexion TCP.

Comme cela sera exposé plus loin dans la description, selon le protocole de communication de l'invention, l'envoi de chaque commande par le module d'application 20 est suivi de l'envoi d'une réponse par la plate-forme 10 (plus précisément par le module de contrôle 12) dont le contenu est indicatif du résultat de traitement de la commande. La réception de cette réponse par le module d'application est nécessaire pour que celui-ci puisse transmettre à nouveau une commande à la plate-forme.

Le serveur vocal 1 selon l'invention comprend par conséquent des moyens de communication qui sont aptes à mettre en oeuvre le protocole de communication client-serveur entre le module d'application 20 et la plate-forme 10.

Dans le module d'application vocale 20, les moyens de communication précités comprennent, d'une part, des moyens de traitement du dialogue incorporés dans la logique de dialogue 22, et aptes à générer des commandes codées selon le protocole de communication de l'invention.

D'autre part, le module d'application 20 comprend une interface de communication 21. L'interface 21 inclut des moyens d'envoi de messages de requête sur la voie de transmission 18 selon le protocole de transmission (TCP), les messages de requête intégrant les commandes générées par la logique de dialogue.

L'interface de communication 21 comprend en outre des moyens de réception de messages de réponse issus de la plate-forme au travers de la voie de transmission selon le protocole de transmission (TCP) et des moyens d'extraction de réponses codées selon le protocole de communication de l'invention, à partir des messages de réponses reçus.

Corrélativement, conformément à l'invention, le module de contrôle 12 de la plate-forme vocale 10, comporte une interface de communication 122. L'interface de communication 122 comprend des moyens de réception de messages de requête émis par le module d'application 20 au travers de la voie de transmission 18 selon le protocole de transmission choisi. L'interface 122 comprend d'autre part des moyens d'extraction de commandes codées selon le protocole de communication de l'invention, à partir des messages de requête reçus du module d'application 20.

L'interface 122 comporte enfin des moyens d'envoi au travers de la voie de transmission 18, selon le protocole de transmission, de messages de réponses intégrant des réponses aux commandes reçues.

Le module de contrôle 12 comprend par ailleurs une unité de traitement 121 apte à traiter les commandes extraites des messages de requête reçus, et à générer des réponses codées selon le protocole de communication de l'invention, consécutivement au traitement de commandes reçues du module d'application 20.

Selon un mode préféré de réalisation, le module d'application vocale 20 et la plate-forme vocale 10 sont implantés respectivement sur des systèmes informatiques distincts reliés l'un avec l'autre par l'intermédiaire d'un réseau de communication.

Dans ce mode de réalisation, la voie de transmission 18 est constituée par une connexion TCP établie sur un chemin au travers du réseau de communication. Selon un mode préféré de réalisation, le réseau de communication est l'Internet.

Dans cette configuration, selon l'invention on peut prévoir d'utiliser la même plate-forme vocale pour plusieurs modules d'application vocale distincts, répartis sur le réseau de communication, et connectables à la plate-forme 10 au travers de connexions TCP.

Dans ce cas, la plate-forme vocale 10 remplit alors véritablement un rôle de serveur de fonctions vocales exécutables à distance, vis-à-vis des différents modules d'application 20 considérés.

A cet effet, conformément à l'invention, l'unité de traitement 121 de la plate-forme vocale est apte à traiter en parallèle des commandes extraites de messages de requête reçus de plusieurs modules d'application distincts, clients de la plate-forme.

Dans la suite de l'exposé, on désignera parfois le module d'application vocale par "module client", et la plate-forme vocale par les termes "plate-forme serveur".

La plate-forme 10 comprend alors, dans le but de gérer en parallèle les contextes différents liés aux modules clients distincts, des moyens de stockage permettant de stocker, dans une file d'attente dédiée à chaque module d'application client, des informations concernant des évènements survenus en relation avec le traitement de commandes reçues du module d'application client considéré. Ces moyens de stockage sont préférentiellement incorporés dans l'unité de traitement 121.

Comme cela sera exposé plus bas dans la description en liaison avec la description de la commande d'attente d'événements *'wait'* (voir point d) infra), les évènements considérés sont relatifs à l'utilisation des fonctions vocales (13).

Le module de contrôle 12 de la plate-forme 10 comprend par conséquent des moyens de gestion des files d'attente d'évènements liées aux différents modules d'application clients.

On va à présent détailler un exemple de protocole de communication selon l'invention, entre une plate-forme vocale et un (ou plusieurs) module d'application vocale.

Conformément à l'invention, il s'agit d'un protocole de type client-serveur, vis-à-vis duquel, le module d'application vocale est le "client", tandis que la plate-forme vocale est le "serveur".

Selon le protocole de communication de l'invention, le module d'application (20) communique avec la plate-forme (10) par l'envoi de commandes. Après traitement de chaque commande reçue, la plate-forme vocale répond au module d'application par l'envoi d'un message de réponse dont le contenu est indicatif du résultat du traitement de la commande.

De ce point de vue, on peut dire que le protocole de l'invention définit des commandes "synchrones", dans le sens où la plate-forme vocale traite séquentiellement les commandes reçues du module d'application client considéré. En effet, la plate-forme serveur traite une commande donnée et fournit une réponse avant de prendre en considération la commande suivante ; par conséquent l'ordre de réception, dans le module d'application, de réponses émises par la plate-forme suite au traitement de deux commandes consécutives, ne risque pas d'être inversé.

Le protocole de communication selon l'invention peut donc se résumer à un ensemble de commandes synchrones émises par le module client et des acquittements associés, émis par la plate-forme serveur.

Selon un mode préféré de réalisation de l'invention, le protocole de communication est un protocole de type textuel, c'est-à-dire qu'il consiste en un échange de messages textuels (ASCII). Cela permet ainsi de rendre ce protocole insensible aux problèmes d'ordre des mots binaires, qui peuvent se révéler, par exemple lorsque les processeurs du client et du serveur sont de nature différente (par ex., processeur Intel® et processeur Motorola®).

Qui plus est, selon un mode préféré de réalisation, le protocole de communication est un protocole textuel de type "ligne à ligne". Les séparateurs non ambigus, que constituent les caractères de "retour à la ligne", augmentent la lisibilité des commandes et simplifient la mise au point de l'application.

La syntaxe générale des commandes et des réponses est du type de celle utilisée pour les interpréteurs de commandes UNIX *(UNIX shells),* c'est-à-dire, une liste d'unités lexicales *(tokens)* délimitées par un nombre quelconque de blancs et éventuellement entourées de guillemets, la liste se terminant par un "saut de ligne" (*newline* (\n)).

Les messages de réponses envoyés par la plate-forme serveur indiquent simplement si l'exécution de la précédente commande reçue du module d'application s'est bien déroulée (réponse 'OK') ou non (réponse 'ERROR').

Le premier élément lexical *(token)* d'une réponse est, selon un mode de réalisation, soit 'OK', soit 'ERROR', et les éléments suivants fournissent des informations complémentaires.

Les commandes définies selon le protocole de l'invention incluent d'une part des commandes dites "génériques" destinées à commander notamment l'allocation des fonctions (encore désignées par "ressources") vocales, la libération de fonctions vocales, l'attente d'évènements, ou encore destinées à l'administration globale ou locale du système client-serveur selon l'invention.

Par exemple, parmi les commandes d'administration globale on trouve des commandes visant à accéder à la liste de modules d'application clients d'une plate-forme serveur donnée, ou visant à terminer une connexion cliente.

D'autre part, il est définit selon le protocole de communication de l'invention, des commandes dites "spécifiques" destinées à agir chacune sur une fonction vocale (13) particulière de la plate-forme (10).

Les commandes spécifiques concernent une ressource de traitement particulière de la plate-forme serveur : par exemple, le réglage de paramètres de reconnaissance vocale, la demande de synthèse vocale ou d'interruption de synthèse d'un énoncé, etc.

On donne ci-dessous un exemple de commandes génériques selon un exemple de mise en oeuvre d'un protocole de communication selon l'invention.

### Commandes génériques

### a) Commande d'allocation d'une ressource de traitement (fonction vocale) fournie par la plate-forme

La syntaxe est la suivante :
*new <nom_de_ressource> <type_de_ressource>*

Cette commande permet d'allouer la ressource identifiée par la chaîne de caractères *'nom_de_ressource'* dont le type est défini par la chaîne de caractères *'type_de_ressource'.*

Les types de ressources disponibles correspondent à des modules logiciels externes - c'est-à-dire, accessibles via une interface de type API ; il s'agit le plus souvent de bibliothèques *(libraries)* - fournis par la plate-forme vocale, par exemple un module de synthèse vocale, de reconnaissance vocale, de téléphonie etc.

La ressource ainsi créée devient alors disponible pour recevoir et répondre aux commandes spécifiques à cette ressource définies par la syntaxe suivante.
*<nom_de_ressource> <sous_commande> [<arguments>...]*

Les commandes spécifiques sont décrites plus bas dans la description.

### b) Commande de libération d'une ressource de traitement fournie par la plate-forme

La syntaxe est la suivante : *delete <nom_de_ressource>*

Cette commande libère la ressource identifiée par *'nom_de_r*e*ssource'.*

### c) Commandes d'administration (locale) des ressources de traitement

Les commandes *'link'* et *'unlink'* sont des commandes permettant respectivement d'établir ou de détruire une connexion de flux d'informations entre deux ressources.

Ainsi, la commande : *link <ress1> <ress2>* permet d'établir une connexion entre le flux de signal de sortie de la ressource identifiée par'ress1' et le flux de signal d'entrée de la ressource identifiée par 'ress2'. Et la commande : *unlik <ress1> <ress2>* permet à l'inverse de détruire ladite connexion.

Par "flux de signal", on entend ici par exemple des échantillons sonores qui transitent entre deux ressources de traitement.

### d) Commande d'attente d'événements

La syntaxe est la suivante : *wait <ress1>.* *

Cette commande permet de placer le module d'application vocale qui a envoyé cette commande, dans un état d'attente d'un événement venant de la ressource *<ress1>.*

La commande : *wait* <*ress1*>.*| <*ress2*>. * place le module d'application dans l'attente d'un événement venant de la ressource <*ress1*> ou de la ressource *<ress2>.*

De tels évènements sont par exemple la fin de l'activation de la ressource de reconnaissance vocale ou l'arrivée d'un appel téléphonique entrant, c'est-à-dire provenant d'un terminal utilisateur distant.

Lorsque l'événement attendu est intervenu, le contenu éventuel de l'événement est retourné en argument de la réponse 'OK' de la plate-forme. Par exemple, si la ressource *<ress2>* est une fonction de reconnaissance vocale, le message de réponse retourné par la plate-forme vocale pourra être le suivant :
*OK evt=<ress2>.reco_done result=Sommaire*

Dans cette réponse donnée à titre d'exemple, le résultat de l'événement de reconnaissance vocale mis en oeuvre par la ressource "ress2" est la sélection par l'utilisateur distant, du menu vocal "Sommaire".

Tous les évènements non sélectionnés par le "masque" donné en argument d'une commande *wait* sont alors éliminés.

Ainsi, même si des évènements générés par une ressource vocale considérée ne sont pas exploitables par un module d'application, ce dernier, grâce au masque fourni en argument d'une commande *wait,* ne les récupère pas et n'est donc pas perturbé par ces évènements. Il en résulte une grande souplesse pour faire évoluer les ressources vocales indépendamment du module d'application considéré. De plus, cela permet d'éviter l'accumulation inutile d'évènements dans la file d'attente d'évènements de la plate-forme vocale, qui est attribuée au module d'application considéré.

### Commandes spécifiques

Comme dit plus haut dans la description, les ressources vocales les plus utiles dans le contexte des serveurs vocaux sont : la téléphonie, la synthèse vocale ou la restitution de sons, la reconnaissance vocale, la détection de fréquences DTMF, l'enregistrement de sons préenregistrés.

Chaque type de ressource possède des caractéristiques propres et donc nécessite des commandes spécifiques.

On donne ci-après des exemples de commandes spécifiques selon un exemple de mise en oeuvre de protocole de communication selon l'invention.

### e) Exemple de commandes relatives à une ressource de téléphonie

*new t Téléphonie*
t *listen 0296057685*
*wait t. **
*t dial 0296057685*
*t answer*
*t hangup*

Dans cet exemple, la commande *'new t Téléphonie'* alloue une ressource de téléphonie, identifiée par "t", disponible dans la bibliothèque (13) de fonctions vocales de la plate-forme.

La commande *'t listen* 0296057685' met la ressource t en attente d'un appel entrant sur le numéro 0296057685, c'est-à-dire le numéro d'appel du serveur vocal interactif (1). Un appel entrant, en provenance d'un terminal utilisateur distant (3), générera un événement que la module d'application pourra attendre suite à l'envoi d'une commande *'wait t.* *'.

La commande *'t answer'* permet de spécifier à la ressource t d'accepter un appel entrant.

La commande *'t dial* 0296057685' permet de créer un appel sortant par la ressource de téléphonie t depuis le numéro 0296057685.

La commande *'t hangup'* permet de commander à la ressource t de raccrocher.

### f) Exemple de commandes relatives à une ressource de synthèse vocale

*new s Synthèse*
*link s t*
*s say "Bonj our, bienvenue ... "*

Dans cet exemple, la commande *'new s Synthèse'* alloue une ressource de synthèse vocale, identifiée par "s", disponible dans la bibliothèque (13) de fonctions vocales de la plate-forme (10)

La commande *'link s t'* permet d'établir une connexion entre le flux de signal de sortie de la ressource de synthèse *s* et le flux de signal d'entrée de la ressource de téléphonie *t* (voir plus haut - Commande générique *link).*

La commande : *s say "Bonjour, bienvenue ...* " qui suit la commande *link* ci-dessus permet alors de synthétiser le message entre les guillemets et de le transmettre via la ressource de téléphonie t.

### g) Exemple de commandes relatives à une ressource de reconnaissance vocale

*new r Reco*
*link t r*
*r setparam model=OuiNon*
*r start*
*wait r.**

Dans cet exemple, la commande *'new r Reco'* alloue une ressource de reconnaissance vocale, identifiée par "r", disponible dans la bibliothèque (13) de fonctions vocales de la plate-forme (10)

La commande *'link t r*' permet d'établir une connexion entre le flux de signal de sortie de la ressource de téléphonie *t* et le flux de signal d'entrée de la ressource de reconnaissance r (voir plus haut - Commande générique *link).*

La commande *'r setparam model=OuiNon'* permet de paramétrer la reconnaissance vocale selon un modèle prédéfini "OuiNon" selon lequel l'utilisateur distant (du terminal 3) doit répondre aux messages vocaux qui lui sont transmis par "oui" ou par "non".

Enfin la commande *'r start'* initialise le processus de reconnaissance vocale. Ce dernier déclenchera alors un évènement qui pourra être récupéré par le module d'application, par l'intermédiaire de la commande *'wait r. *'.*

L'exemple exposé ci-dessus de mise en oeuvre d'un protocole de communication selon l'invention, notamment en ce qui concerne la syntaxe et l'attribution des noms aux commandes, permet avantageusement de circonscrire la tâche de la plate-forme serveur (10) à celle d'un noyau logiciel *(kernel)* totalement indépendant du matériel utilisé pour la plate-forme ainsi que des modules fonctionnels externes offerts (bibliothèque de fonctions 13). Le rôle de ce noyau logiciel se limite ainsi principalement aux opérations suivantes:
- accepter de nouvelles connexions TCP;
- traiter les commandes génériques reçues via les connexions TCP avec envoi des réponses correspondantes selon le protocole de communication ;
- fournir l'environnement d'exécution et d'interconnexion ('link' / 'unlink') des modules externes (fonctions vocales) chargés à la demande ('new' / 'delete') ;
- gérer une file d'attente d'évènements pour chaque module d'application client ; et
- déléguer le traitement des commandes spécifiques aux ressources fonctionnelles concernées.

Conformément à l'invention, l'architecture client-serveur entre la plate-forme vocale (serveur) et le ou les modules d'application (clients) permet donc de maximiser la modularité et la portabilité de la plate-forme.

Par ailleurs, le protocole de communication selon l'invention permet d'instaurer une séparation claire des cycles de vie entre la plate-forme et les modules d'application : la plate-forme peut rester pratiquement inchangée très longtemps (aux mises à jour logicielles près), alors que les modules clients peuvent être recyclés très fréquemment, par exemple selon les considérations ergonomiques concernant le dialogue entre l'utilisateur et le serveur vocal. L'évolution des modules d'application, qui est indépendante de celle de la plate-forme vocale, peut par conséquent s'effectuer sans provoquer de perturbation de service vis-à-vis de l'utilisateur.

Enfin, le protocole de communication selon l'invention permet de confiner les flux d'informations sonores (par ex. vocales) qui sont par nature temps réel, à l'intérieur de la plate-forme vocale, libérant ainsi le protocole de communication des problèmes de gestion de bande passante et de contrôle de flux.

Pour terminer la description de la présente invention, on donne ci-après dans l'Annexe qui suit, un exemple d'échange de messages selon un protocole de communication selon l'invention, entre une plate-forme serveur et un module d'application vocale, client de la plate-forme.

### ANNEXE

### Exemple d'échanges de messages entre une plate-forme serveur et un module d'application client (MAC)

### Notations :

- >: : commande envoyée du module d'application vers la plate-forme.
- <: : réponse envoyée de la plate-forme vers le module d'application.
- /** ... **/: : commentaires.

### l** Préparation de ressources en amont de l'attente d'appel d'un utilisateur distant **/

- >: *new t tel* /** *allocation ressource de téléphonie ***/
- <: *OK*
- >: *new s synt* /***allocation ressource de synthèse **l*
- <: OK
- >: *new r reco* /*** allocation ressource de reconnaissance ***/
- <: *OK*
- >: *r setparam model=OuiNon*
- <: *OK*
- >: link t r
- <: OK
- >: *link s t*
- <: OK

### /** Mise en attente d'appel sur numéro d'appel du serveur vocal **/

- >: t listen *0296057685*
- <: OK
- >: *wait t*. *

### /** Arrivée d'un appel entrant provenant du numéro utilisateur 0296052404 **/

- <: *OK evt=t.incoming remote=0296052404 local=0296057685*

### l** Acceptation de l'appel entrant **l

- >: *t answer*
- <: *OK*

### l** Dialogue avec le terminal utilisateur distant **l

- >: *s say "Bonjour, bienvenue. . .* "
- <: *OK*
- >: *s say "Voulez-vous* . . ."
- <: *OK*
- >: *r start* /*** Initialisation processus de reconnaissance vocale ***/
- <: *OK*
- >: *wait r.**|*t*.* /***MAC* attends événement sur r ou sur t **/
- >: *OK evt=r. result res=Oui* /*** Réponse contient résult. événement sur r : réponse "oui" de l'utilisateur distant* **/
/***Suite du dialogue avec l'utilisateur distant ***/
. . .
/*** Raccrochage du terminal utilisateur distant ***/
- >: *wait r.**|*t*.* /*** MAC attends événement sur r ou sur t ***/
- <: *OK evt=t.hangup* /*** réponse contient résult. événement sur t : l'utilisateur a raccroché ***/
/*** FIN **l*

## Revendications

1. Serveur vocal (1) comprenant une plate-forme vocale (10) offrant un ensemble de fonctions vocales (13) et un module d'application vocale (20) contrôlant la plate-forme par l'envoi à celle-ci de commandes destinées à mettre en oeuvre lesdites fonctions, **caractérisé en ce qu'**il comprend des moyens de communication (12, 18, 20) aptes à mettre en oeuvre un protocole de communication de type client-serveur entre le module d'application et la plate-forme, vis-à-vis duquel le module d'application est le client et la plate-forme le serveur, et selon lequel l'envoi de chaque commande par le module d'application est suivi de l'envoi d'une réponse par la plate-forme, ladite réponse étant Indicative du résultat du traitement de la commande par la plate-forme, la réception de cette réponse par le module d'application conditionnant l'envoi d'une commande suivante.

2. Serveur vocal selon la revendication 1, **caractérisé en ce que** lesdits moyens de communication comprennent une voie de transmission (18) apte à permettre la transmission d'informations entre le module d'application (20) et la plate-forme (10) selon un protocole de transmission prédéfini.

3. Serveur vocal selon la revendication 2, **caractérisé en ce que** lesdits moyens de communication comprennent en outre dans le module d'application vocale (20) :
- des moyens de traitement (22) du dialogue aptes à générer des commandes codées selon ledit protocole de communication,
- des moyens d'envoi (21) de messages de requête intégrant lesdites commandes générées, au travers de la voie de transmission (18), selon ledit protocole de transmission,
- des moyens de réception (21) de messages de réponse issus de la plate-forme (10) au travers de la voie de transmission (18) selon ledit protocole de transmission et
- des moyens d'extraction (21) de réponses codées selon ledit protocole de communication, à partir des messages de réponses reçus.

4. Serveur vocal selon la revendication 3, **caractérisé en ce que** lesdits moyens de communication comprennent en outre, dans la plate-forme vocale (10) :
- des moyens de réception (122) de messages de requête émis par le module d'application (20) au travers de la voie de transmission (18) selon le protocole de transmission et
- des moyens d'extraction (122) de commandes codées selon ledit protocole de communication, à partir des messages de requête reçus,
- des moyens de traitement (121) aptes à traiter les commandes extraites des messages de requête reçus, et à générer des réponses codées selon ledit protocole de communication, consécutivement au traitement de commandes reçues du module d'application (20),
- des moyens d'envoi (122) de messages de réponses intégrant les réponses générées, au travers de la voie de transmission (18), selon ledit protocole de transmission.

5. Serveur vocal selon l'une quelconque des revendications 1 à 4, dans lequel le module d'application vocale (20) et la plate-forme vocale (10) sont implantés respectivement sur des systèmes informatiques distincts reliés l'un avec l'autre par l'intermédiaire d'un réseau de communication, par exemple l'internet.

6. Serveur vocal selon la revendication 4 ou 5, **caractérisé en ce que** les moyens de traitement (121) de la plate-forme vocale sont aptes à traiter en parallèle des commandes extraites de messages de requête reçus d'une pluralité de modules d'application distincts, clients de la plate-forme.

7. Serveur vocal selon la revendication 6, **caractérisé en ce que** la plate-forme (10) comporte en outre des moyens de stockage aptes à stocker, dans une file d'attente dédiée à chaque module d'application client (20), des informations concernant des évènements survenus en relation avec le traitement de commandes reçues du module d'application client considéré, et relatifs à l'utilisation desdites fonctions vocales (13).

8. Serveur vocal selon l'une quelconque des revendications 2 à 7, dans lequel la voie de transmission (18) est constituée par une connexion selon le protocole de transmission TCP.

9. Serveur vocal selon l'une quelconque des revendications précédentes, **caractérisé en ce que**, selon ledit protocole de communication, le module d'application (20) communique avec la plate-forme (10) par l'envoi de commandes incluant:
- des commandes génériques pour commander notamment l'allocation de fonctions vocales, la libération de fonctions vocales, et l'attente d'évènements; et
- des commandes spécifiques destinées à agir chacune sur une fonction vocale particulière de la plate-forme;
la plate-forme vocale répondant après traitement de chaque commande reçue, par l'envoi d'un message de réponse dont le contenu est indicatif du résultat du traitement de la commande.

10. Serveur vocal selon l'une quelconque des revendications précédentes, **caractérisé en ce que** ledit protocole de communication est un protocole textuel ligne-à-ligne.

11. Système informatique comprenant un module d'application vocale pour un serveur vocal selon l'une quelconque des revendications 5 à 10.

12. Système informatique comprenant une plate-forme vocale pour un serveur vocal selon l'une quelconque des revendications 5 à 10.

## Claims

1. Voice server (1) comprising a voice platform (10) offering a set of voice functions (13) and a voice application module (20) controlling the platform by dispatching to the latter commands intended to implement said functions, **characterized in that** it comprises communication means (12, 18, 20) able to implement a communication protocol of client-server type between the application module and the platform, in relation to which the application module is the client and the platform the server, and according to which the dispatching of each command by the application module is followed by the dispatching of a response by the platform, said response being indicative of the result of the processing of the command by the platform, the receipt of this response by the application module conditioning the dispatching of a subsequent command.

2. Voice server according to Claim 1, **characterized in that** said communication means comprise a transmission pathway (18) able to allow the transmission of information between the application module (20) and the platform (10) according to a predefined transmission protocol.

3. Voice server according to Claim 2, **characterized in that** said communication means furthermore comprise in the voice application module (20):
- dialogue processing means (22) able to generate commands coded according to said communication protocol,
- means (21) for dispatching request messages integrating said commands generated, through the transmission pathway (18), according to said transmission protocol,
- means (21) for receiving response messages emanating from the platform (10) through the transmission pathway (18) according to said transmission protocol and
- means (21) for extracting responses coded according to said communication protocol, on the basis of the response messages received.

4. Voice server according to Claim 3, **characterized in that** said communication means furthermore comprise, in the voice platform (10):
- means (122) for receiving request messages sent by the application module (20) through the transmission pathway (18) according to the transmission protocol and
- means (122) for extracting commands coded according to said communication protocol, on the basis of the request messages received,
- processing means (121) able to process the commands extracted from the request messages received, and to generate responses coded according to said communication protocol, subsequent to the processing of commands received from the application module (20),
- means (122) for dispatching response messages integrating the responses generated, through the transmission pathway (18), according to said transmission protocol.

5. Voice server according to any one of Claims 1 to 4, in which the voice application module (20) and the voice platform (10) are installed respectively on distinct computer systems linked together by way of a communication network, for example the Internet.

6. Voice server according to Claim 4 or 5,
**characterized in that** the processing means (121) of the voice platform are able to process, in parallel, commands extracted from request messages received from a plurality of distinct application modules that are clients of the platform.

7. Voice server according to Claim 6, **characterized in that** the platform (10) furthermore comprises storage means able to store, in a queue dedicated to each client application module (20), information relating to events that have arisen in conjunction with the processing of commands received from the relevant client application module, and relating to the use of said voice functions (13).

8. Voice server according to any one of Claims 2 to 7, in which the transmission pathway (18) consists of a connection according to the TCP transmission protocol.

9. Voice server according to any one of the preceding claims, **characterized in that**, according to said communication protocol, the application module (20) communicates with the platform (10) by dispatching commands including:
- generic commands for controlling in particular the allocation of voice functions, the freeing of voice functions, and events standby; and
- specific commands each intended to act on a particular voice function of the platform;
the voice platform responding after processing each command received, by dispatching a response message whose content is indicative of the result of the processing of the command.

10. Voice server according to any one of the preceding claims, **characterized in that** said communication protocol is a line-by-line text protocol.

11. Computer system comprising a voice application module for a voice server according to any one of Claims 5 to 10.

12. Computer system comprising a voice platform for a voice server according to any one of Claims 5 to 10.

## Patentansprüche

1. Sprachserver (1), der eine Sprachplattform (10), die eine Gruppe von Sprachfunktionen (13) anbietet, und ein Sprachanwendungsmodul (20) aufweist, das die Plattform **dadurch** steuert, dass es Befehle an sie sendet, die dazu bestimmt sind, die Funktionen auszuführen, **dadurch gekennzeichnet, dass** er Kommunikationsmittel (12, 18, 20) aufweist, die geeignet sind, um ein Kommunikationsprotokoll vom Typ Client-Server zwischen dem Anwendungsmodul und der Plattform auszuführen, dem gegenüber das Anwendungsmodul der Client und die Plattform der Server ist, und gemäß dem auf das Senden jedes Befehls durch das Anwendungsmodul das Senden einer Antwort durch die Plattform folgt, wobei die Antwort für das Ergebnis der Verarbeitung des Befehls durch die Plattform indikativ ist, wobei der Empfang dieser Antwort durch das Anwendungsmodul das Senden eines folgenden Befehls entscheidend beeinflusst.

2. Sprachserver nach Anspruch 1, **dadurch gekennzeichnet, dass** die Kommunikationmittel einen Übertragungskanal (18) aufweisen, der die Übertragung von Informationen zwischen dem Anwendungsmodul (20) und der Plattform (10) gemäß einem vordefinierten Übertragungsprotokoll erlauben kann.

3. Sprachserver nach Anspruch 2, **dadurch gekennzeichnet, dass** die Kommunikationsmittel außerdem im Sprachanwendungsmodul (20) aufweisen:
- Verarbeitungsmittel (22) des Dialogs, die Befehle erzeugen können, die gemäß dem Kommunikationsprotokoll codiert sind,
- Mittel (21) zum Senden von Anfragemitteilungen, die die erzeugten Befehle enthalten, über den Übertragungskanal (18) gemäß dem Übertragungsprotokoll,
- Mittel (21) für den Empfang von Antwortmitteilungen, die von der Plattform (10) stammen, über den Übertragungskanal (18) gemäß dem Übertragungsprotokoll, und
- Mittel (21) zum Extrahieren von gemäß dem Kommunikationsprotokoll codierten Antworten ausgehend von den empfangenen Antwortmitteilungen.

4. Sprachserver nach Anspruch 3, **dadurch gekennzeichnet, dass** die Kommunikationsmittel außerdem in der Sprachplattform (10) aufweisen:
- Mittel (122) für den Empfang von Anfragemitteilungen, die vom Anwendungsmodul (20) über den Übertragungskanal (18) gemäß dem Übertragungsprotokoll gesendet werden, und
- Mittel (122) zum Extrahieren von gemäß dem Kommunikationsprotokoll codierten Befehlen ausgehend von den empfangenen Anfragemitteilungen,
- Verarbeitungsmittel (121), die die aus den empfangenen Anfragemitteilungen extrahierten Befehle verarbeiten und gemäß dem Kommunikationsprotokoll codierte Antworten erzeugen können, nach der Verarbeitung von vom Anwendungsmodul (20) empfangenen Befehlen,
- Mittel (122) zum Senden von Antwortmitteilungen, die die erzeugten Antworten enthalten, über den Übertragungskanal (18) gemäß dem Übertragungsprotokoll.

5. Sprachserver nach einem der Ansprüche 1 bis 4, bei dem das Sprachanwendungsmodul (20) und die Sprachplattform (10) in unterschiedlichen Informationssystemen installiert sind, die miteinander über ein Kommunikationsnetz verbunden sind, zum Beispiel das Internet.

6. Sprachserver nach Anspruch 4 oder 5, **dadurch gekennzeichnet, dass** die Verarbeitungsmittel (121) der Sprachplattform parallel Befehle verarbeiten können, die aus Anfragemitteilungen extrahiert werden, die von mehreren unterschiedlichen Anwendungsmodulen, die Clients der Plattform sind, empfangen werden.

7. Sprachserver nach Anspruch 6, **dadurch gekennzeichnet, dass** die Plattform (10) außerdem Speichermittel aufweist, die in einer jedem Client-Anwendungsmodul (20) gewidmeten Warteschlange Informationen speichern können, die Ereignisse betreffen, welche in Zusammenhang mit der Verarbeitung von Befehlen aufgetreten sind, die vom betrachteten Client-Anwendungsmodul empfangen wurden, und die sich auf die Verwendung der Sprachfunktionen (13) beziehen.

8. Sprachserver nach einem der Ansprüche 2 bis 7, bei dem der Übertragungskanal (18) aus einer Verbindung gemäß dem Übertragungsprotokoll TCP besteht.

9. Sprachserver nach einem der vorhergehenden Ansprüche, **dadurch gekennzeichnet, dass** gemäß dem Kommunikationsprotokoll das Anwendungsmodul (20) mit der Plattform (10) über das Senden von Befehlen kommuniziert, zu denen gehören:
- generische Befehle, um insbesondere die Zuweisung von Sprachfunktionen, die Freigabe von Sprachfunktionen und das Erwarten von Ereignissen zu steuern; und
- spezifische Befehle, die dazu bestimmt sind, je auf eine besondere Sprachfunktion der Plattform einzuwirken;
wobei die Sprachplattform nach Verarbeitung jedes empfangenen Befehls durch das Senden einer Antwortmitteilung antwortet, deren Inhalt für das Ergebnis der Verarbeitung des Befehls indikativ ist.

10. Sprachserver nach einem der vorhergehenden Ansprüche, **dadurch gekennzeichnet, dass** das Kommunikationsprotokoll ein Zeile-für-Zeile-Textprotokoll ist.

11. Datenverarbeitungssystem, das ein Sprachanwendungsmodul für einen Sprachserver nach einem der Ansprüche 5 bis 10 aufweist.

12. Datenverarbeitungssystem, das eine Sprachplattform für einen Sprachserver nach einem der Ansprüche 5 bis 10 aufweist.
